# EUROPEAN PATENT APPLICATION

(11) **EP 1 584 928 A1**
(43) Date of publication of application: **12.10.2005**
(21) Application number: 05102007.1
(22) Date of filing: 15.03.2005
(51) Int. Cl.: G01P 21/02, G01P 3/489, G01C 22/00

(54) **System and method for estimating a vehicle speed**

(30) Priority: 07.04.2004 SE 4009445
(71) Applicant: Scania CV AB (publ), 151 87 Södertälje (SE)
(72) Inventor: Sandberg, Tony, 645 44, Strängnäs (SE)

(57) **Abstract**

System for estimating the speed of a vehicle (1) comprising means (11) to determine a first parameter based on the rotational speed of a first set of wheels (5) of the vehicle, such as its drive wheels, and means (14) to estimate the speed of the vehicle (*V*_{*estimate*}) using said first parameter. The system also comprises means (12) to determine a second parameter based on the rotational speed of a second set of wheels (4) of the vehicle and means (16) to identify any difference between said first and second parameters.

## Description

### TECHNICAL FIELD OF THE INVENTION AND PRIOR ART

The present invention concerns a system for estimating the speed of a vehicle comprising means to determine a first parameter based on the rotational speed of a first set of wheels of the vehicle, such as its drive wheels, and means to estimate the speed of the vehicle using said first parameter. The invention also relates to a method for estimating the speed of a vehicle, a vehicle, an electronic control unit (ECU), a computer program and a computer program product.

The speed of a vehicle is usually estimated by measuring the rotational speed of some part of the vehicle's drive shaft, such as the output shaft of the vehicle's gearbox. The rotational speed of the drive wheels of the vehicle is then determined using this information and knowledge of the gearing between the output shaft of the vehicle's gearbox and the drive wheels. The speed of the vehicle can then be estimated using the rotational speed of the drive wheels and knowledge of the rolling distance of the drive wheels per revolution. The rolling distance of the drive wheels per revolution is proportional to the drive wheels' rolling radius i.e. the distance between the drive wheels' axis of rotation and the wheels' contact surface with the ground.

Conventional systems for estimating the speed of a vehicle are calibrated when the vehicle is in an unloaded state. However the weight of a heavy goods vehicle is considerably increased when it is carrying its maximum load as compared to when it is in an unloaded state. The wheels of a heavy goods vehicle are therefore subjected to a much greater load when the vehicle is carrying its maximum load as compared to when the vehicle is in an unloaded state. The load on the wheels varies depending on the weight of the load that the vehicle is carrying.

When carrying a load the wheels of a vehicle are compressed radially inwards by an amount depending on the load on the wheels. The rolling radius of a wheel of a heavy goods vehicle can vary by about 20 mm when the vehicle is carrying its maximum load as compared to when the vehicle is in an unloaded state. The wheel's rolling radius and consequently its rolling distance per revolution are reduced by approximately 4% when the vehicle is carrying its maximum load as compared to when the vehicle is in an unloaded state. This means that the actual speed of a loaded vehicle is less than the speed that is indicated on its speedometer.

A heavy goods vehicle often comprises a speed limiting device that is used to prevent the vehicle from exceeding a maximum allowed speed. A speed limiting device that receives a vehicle speed estimate from a conventional system for estimating the speed of the vehicle will however limit the speed of the vehicle to a speed that is lower than the maximum allowed speed when that vehicle is carrying a heavy load. A heavily loaded vehicle can therefore suffer an unintentional delay when travelling between two locations.

### SUMMARY OF THE INVENTION

The object of the present invention is to provide a system for estimating the speed of a vehicle which checks whether the vehicle's speed is being estimated accurately.

This object is fulfilled with a system having the features of claim 1 namely a system comprising means to determine a first parameter based on the rotational speed of a first set of wheels of the vehicle, such as its drive wheels, and means to estimate the speed of the vehicle using said first parameter. The system also comprises means to determine a second parameter of a second set of wheels of the vehicle and means to identify any difference between said first and second parameters. According to an embodiment of the invention said first and second parameters are a rotational speed or a vehicle speed i.e. two rotational speeds are determined and compared, or two rotational speeds are determined from which vehicle speed estimates are calculated and compared.

A difference between the rotational speeds of two sets of wheels of a vehicle occurs if each set of wheels is subjected to a different load since an increased load on a set of wheels will decrease the radius of those wheels. A wheel with a smaller radius has to rotate faster than a wheel with a larger radius in order to cover the same distance per unit time.

A difference between the rotational speeds of two sets of wheels having air-filled tyres may also occur if the tyre pressure of the wheels in each set is not the same. If the tyre pressure of a wheel is too low, the wheel undergoes an elastic deformation on contact with the ground, which results in the wheel having a smaller radius than if the tyre pressure was correct.

The inventive system therefore checks whether the vehicle speed that is estimated using said at least one parameter based on the rotational speed of the first set of wheels is accurate by comparing it with said second parameter based on the rotational speed of the second set of wheels. The greater the difference between said first and second parameters, the more inaccurate the vehicle speed estimate. The inventive system therefore acts as a warning system that may for example be used to warn a driver that the actual speed of his vehicle is different to the speed indicated on the vehicle's speedometer.

According to an embodiment of the invention the second set of wheels is the vehicle's front set of wheels since a vehicle's front set of wheels is least affected by variations in the load carried by the vehicle. The second set of wheels may however be any other set of wheels of the vehicle and preferably a set of wheels that is subjected to a load that is not the same as the load to which the first set of wheels is subjected when the vehicle is carrying a load.

According to an embodiment of the invention the system comprises means to correct the vehicle speed estimate by an amount whose magnitude depends on the magnitude of the difference between said first and second parameters based on the rotational speeds of the two sets of wheels so as to obtain the actual speed of the vehicle. The amount by which the vehicle speed estimate has to be corrected is evaluated using experimentally or theoretically obtained data on how the actual vehicle speed varies as a function of the difference between said at least two parameters that are determined by the system. The magnitude of the correction usually varies linearly with the magnitude of said difference. The inventive system therefore allows the actual speed of the vehicle to be obtained irrespective of the load that the vehicle is carrying.

According to an embodiment of the invention the actual speed, i.e. the corrected vehicle speed estimate, of the vehicle is indicated on display means, such as the speedometer of the vehicle arranged on the vehicle's instrument panel, for example, so that the driver knows exactly how fast the vehicle is travelling even when it is heavily loaded. The actual speed of the vehicle may be indicated constantly or on request. If the actual speed is provided only on request it may also be provided by means of an audible signal.

According to an embodiment of the invention the means for correcting for the vehicle speed estimate is arranged to start correcting the vehicle speed estimate on identification of a difference that exceeds a pre-determined threshold value. This threshold value may be set to zero meaning that the vehicle speed estimate is constantly corrected so that only the actual speed of the vehicle is shown on the vehicle's speedometer, for example. Alternatively the threshold value may be set to higher value such as on identification of a 10%-difference between said first and second parameters since in an unloaded state or when the vehicle is carrying a small load it is not necessary to make any correction to the vehicle speed estimate.

The present invention also concerns a vehicle for carrying a load which comprises a system according to any of the embodiments mentioned above. According to an embodiment of the invention the vehicle comprises speed limiting means that are provided with the actual speed of the vehicle, i.e. the corrected vehicle speed estimate, to ensure that the actual speed of the vehicle does not exceed a maximum allowed value. The speed limiting means will therefore limit the vehicle's speed to the maximum allowed value even if the vehicle is heavily loaded and thus ensure that the vehicle completes every journey within the expected travel time.

The present invention also relates to a method for estimating the speed of a vehicle comprising the step of determining a first parameter based on the rotational speed of a first set of wheels of the vehicle, such as the drive wheels, and estimating the speed of the vehicle using said first parameter. The method also comprises the steps of determining a second parameter based on the rotational speed of a second set of wheels of the vehicle, such as the vehicle's front set of wheels, and identifying any difference between said first and second parameters.

According to an embodiment of the invention said first and second parameters are one of the following: a rotational speed or a vehicle speed i.e. two rotational speeds are determined and compared, or two rotational speeds are determined from which vehicle speed estimates are calculated and compared.

According to an embodiment of the invention the method comprises the step of correcting the vehicle speed estimate by an amount whose magnitude depends on the magnitude of the difference between the first and second parameters as to obtain the actual speed of the vehicle.

According to another embodiment of the invention the method comprises the step of indicating the actual speed of the vehicle on display means such as the speedometer of the vehicle.

According to a further embodiment of the invention the method comprises the step of triggering the means for correcting for the vehicle speed on identification of a difference that exceeds a pre-determined threshold value. This threshold value can be set to 0 if it is desired that the correcting means are active all of the time the vehicle is in use.

According to a yet further embodiment of the invention the method further comprises the step of using the actual speed of the vehicle as the input for speed limiting means.

The present invention even relates to a computer program for estimating a vehicle speed, comprising computer readable program code means which when run on a computer causes the computer to estimate a first parameter based on the rotational speed of a first set of wheels, such as the drive wheels so as to enable a vehicle speed estimate to be obtained. The computer program also comprises computer readable program code means which when run on the computer causes the computer to estimate a second parameter based on the rotational speed of a second set of wheels of the vehicle and to identify any difference between said first and second parameters.

According to an embodiment of the invention said first and second parameters are one of the following: a rotational speed or a vehicle speed estimate i.e. two rotational speeds are determined and compared, or two rotational speeds are determined from which vehicle speed estimates are calculated and compared.

According to another embodiment of the invention the computer program comprises computer readable program code means which when run on the computer causes the computer to correct the vehicle speed estimate by an amount whose magnitude depends on the difference between the first and second parameters so as to obtain the actual speed of the vehicle.

According to a further embodiment of the invention the computer program comprises computer readable program code means which when run on the computer causes the computer to trigger means for correcting for the vehicle speed estimate on identification of a difference that exceeds a pre-determined threshold value.

Furthermore the invention concerns a computer program product comprising a computer program stored by means of a computer-readable medium arranged to make a computer or processor execute a computer program according to any of the embodiments described above.

The present invention also concerns an electronic control unit (ECU) that comprises execution means, a memory and data storage means, whereby a computer program to make a computer or processor execute at least one of the steps of a method as specified in the claims is stored in said data storage means.

Further advantages as well as advantageous features of the invention appear from the following description and the other dependent claims.

### BRIEF DESCRIPTION OF THE DRAWINGS

Fig. 1 schematically shows a heavy goods vehicle comprising a system for estimating its speed according to an embodiment of the invention.
Fig. 2 shows a section of the heavy goods vehicle of figure 1 viewed from above, and
Fig. 3 is a flow diagram detailing a method according to a embodiment of the invention.

The following description and drawings are not intended to limit the present invention to the embodiment disclosed. The embodiment disclosed merely exemplifies the principles of the present invention.

### DETAILED DESCRIPTION OF AN EMBODIMENT OF THE INVENTION

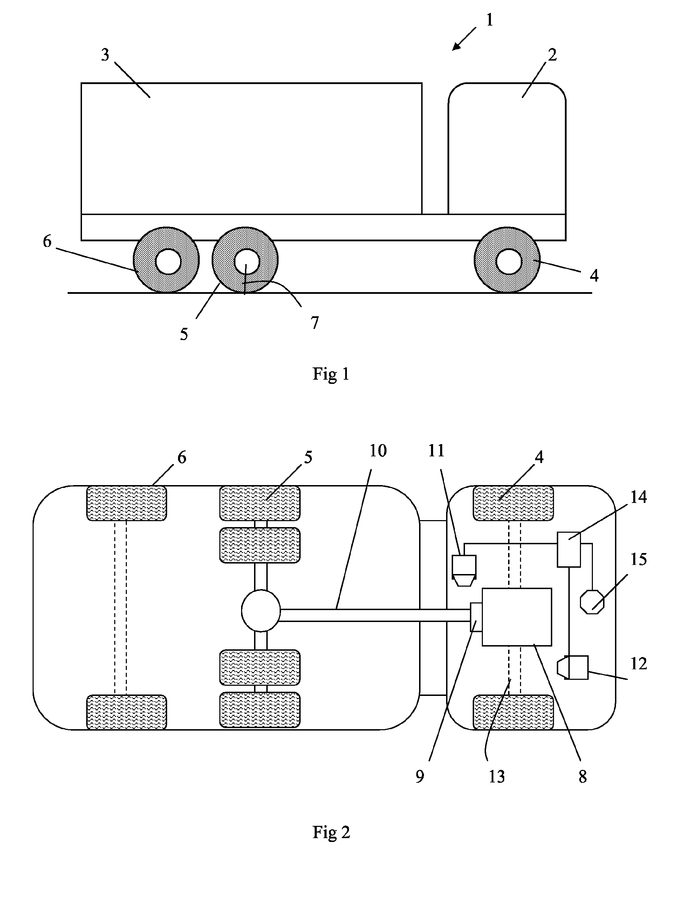

Figure 1 shows a heavy goods vehicle 1 comprising a driver's cabin 2 and cargo space 3. The vehicle 1 comprises a set of two steerable front wheels 4, a set of four drive wheels 5 and a set of two back wheels 6. The rolling radius 7 of one of the drive wheels 5 is shown in figure 1. When the vehicle is carrying a load its drive wheels 5 and back wheels 6 are subjected to a greater load than its front wheels 4.

The vehicle 1 is driven by a motor 8 that drives the drive wheels 5 by means of a gearbox 9 having an output shaft 10 as shown in figure 2.

The vehicle comprises a system for estimating its speed. The system comprises a first rotational speed sensor 11 that is arranged to substantially constantly determine the rotational speed of the output shaft 10 of the gearbox and a second rotational speed sensor 12 to substantially constantly determine the rotational speed of the front wheel axle 13. The sensors 11, 12 are connected to a calculation unit in the form of an ECU 14 that determines the rotational speed of the drive wheels 5 using signals from the first sensor 11 and stored information concerning the gearing between the output shaft 10 of the gearbox and the drive wheels 5. A plurality of sensors could be used to determine the average rotational speed of said output shaft 10 and front wheel axle 13. The rotational speed could also be determined by measuring the rotational speed of any other part of the vehicle's drive shaft or any of the vehicle's other sets of wheels.

In order to estimate the speed of the vehicle the ECU 14 comprises data storage means containing information concerning the rolling radius 7 and thus the rolling distance per revolution (2 x 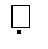 x rolling radius) of the drive wheels 5 for the vehicle in its unloaded state with its drive wheels 5 inflated to the optimum tyre pressure. The rolling radius 7 and rolling distance per revolution of the drive wheels 5 is assumed to be constant for the vehicle estimate calculations.

The ECU 14 comprises means to identify a difference in the rotational speed of the front wheels 4 and the drive wheels 5 i.e. a difference that does not correspond to what the difference should be for the vehicle in its unloaded state. In practice the difference in the rotational speed of the front wheels and the drive wheels of a vehicle might not be 0 even if all of the vehicle's wheels are of the same radius and inflated to the same tyre pressure since the front wheels and the drive wheels might be subjected to different loading due to the different weights of different parts of the vehicle.

The ECU 14 comprises means to correct the vehicle speed estimate by an amount whose magnitude depends on the magnitude of the identified difference between the two rotational speeds. The amount by which the vehicle speed estimate has to be corrected is evaluated using data on how the actual vehicle speed varies as a function of the difference between the two rotational speeds which is stored in the system.

The corrected vehicle speed estimate i.e. the actual speed of the vehicle is then transmitted to speed limiting means 15 and is displayed on the vehicle's speedometer 15. The speed limiting means is arranged to limit the vehicle's speed to 89 km/h for example. Using the inventive system means that the vehicle will actually be able to travel at a maximum speed of 89km/h unlike vehicles having conventional systems for estimating their speed which result in the vehicles actually travelling at a lower speed than the maximum allowed speed.

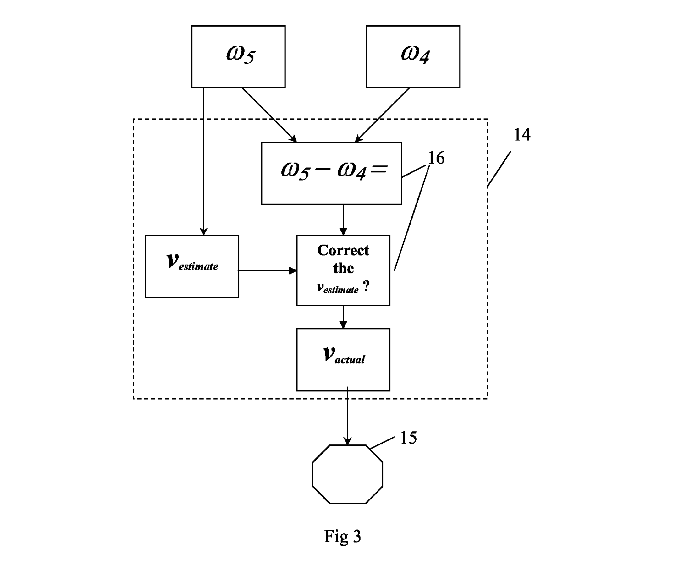

Figure 3 is a flow chart detailing a method for estimating the speed of a vehicle according to an embodiment of the invention. The rotational speed □₅ of the drive wheels 5 of a vehicle 1 is determined and the vehicle's speed is then estimated using this information and knowledge of the drive wheels' rolling distance per revolution. The rotational speed □₄ of the front wheels 4 of the vehicle is determined and software means 16 contained in the ECU 14 identify whether there is a difference between the rotational speeds □₅ and □₄.

Once the vehicle speed estimate, *v*_{*estimate*}*,* and information concerning the magnitude of the difference is identified by the software means 16, the ECU 14 corrects the vehicle speed estimate, *v*_{*estimate*} if necessary/desired in order to obtain the actual speed of the vehicle, *v*_{*actual*}*.* The actual speed of the vehicle is then limited by the ECU 14 and displayed on the speedometer 15 of the vehicle. In the embodiment described above software means contained in an ECU is used to calculate, correct and limit the speed of a vehicle, these functions could however be performed by one or more hardware units or a combination of hardware and software means for example an ECU 14 could be arranged to receive a vehicle speed estimate, *v*_{*estimate*} that has been calculated by a separate hardware unit.

As the magnitude of the difference between □₅ and □₄ is proportional to the load carried by the vehicle, this difference could also be used to estimate the weight of the load carried by the vehicle.

The invention is of course not in any way restricted to the embodiments thereof described above, but many possibilities to modifications thereof would be apparent to a man with ordinary skill in the art without departing from the basic idea of the invention as defined in the appended claims.

It should be noted that the expression "difference between the rotational speeds of the two sets of wheels" as used in this document is intended to mean a difference between the rotational speeds of two sets of wheels which does not correspond to what that difference should be when the vehicle is in an unloaded state. If for example the dimensions of the wheels in each set are not the same, for example if the vehicle's drive wheels and back wheels are smaller than the vehicles front wheels, or if different sets of the vehicle's wheels are subjected to different loading due to the different weights of different parts of the vehicle then there will be a difference between the rotational speeds of the drive wheel axle and the front wheel axle even when the vehicle is in an unloaded state. The inventive system therefore comprises means to identify differences between the rotational speeds of two sets of wheels of any vehicle other than any difference that exists when the vehicle is in an unloaded state.

## Claims

1. System for estimating the speed of a vehicle (1) comprising means (11) to determine a first parameter based on the rotational speed of a first set of wheels of the vehicle (5), such as its drive wheels, and means (14) to estimate the speed of the vehicle *(v*_{*estimate*}*)* using said first parameter, ***characterized* in that** it also comprises means (12) to determine a second parameter based on the rotational speed of a second set of wheels (4) of the vehicle and means (16) to identify any difference between said first and second parameters.

2. System according to claim 1, ***characterized* in that** said first and second parameters are one of the following: a rotational speed or a vehicle speed.

3. System according to claim 1 or 2, ***characterized* in that** the second set of wheels is the vehicle's front set of wheels (4).

4. System according to any of the preceding claims, ***characterized* in that** it comprises means (17) to correct the vehicle speed estimate *(v*_{*estimate*}*)* by an amount whose magnitude depends on the magnitude of the difference between said first and second parameters so as to obtain the actual speed *(v*_{*actual*}*)* of the vehicle.

5. System according to claim 4, ***characterized* in that** the actual speed *(v*_{*actual*}*)* of the vehicle is indicated on display means (15) such as the speedometer of the vehicle.

6. System according to claim 4 or 5, ***characterized* in that** the means (18) for correcting for the vehicle speed estimate *(v*_{*estimate*}*)* is arranged to start correcting the vehicle speed estimate *(v*_{*estimate*}*)* on identification of a difference between said first and second parameters that exceeds a pre-determined threshold value.

7. Vehicle for carrying a load, ***characterized* in that** it comprises a system according to any of the preceding claims.

8. Vehicle according to claim 7, ***characterized* in that** it comprises speed limiting means (15) that are provided with the actual speed *(v*_{*actual*}*)* of the vehicle obtained using said system to ensure that the actual speed of the vehicle does not exceed a maximum allowed value.

9. Method for estimating the speed of a vehicle comprising the step of determining a first parameter based on the rotational speed of a first set of wheels (5) of the vehicle, such as the drive wheels, and estimating the speed of the vehicle *(v*_{*estimate*}*)* using said first parameter, ***characterized* in that** it also comprises the steps of determining a second parameter based on the rotational speed of a second set of wheels (4) of the vehicle and identifying any difference between said first and second parameters.

10. Method according to claim 9, ***characterized* in that** said first and second parameters are one of the following: a rotational speed or a vehicle speed.

11. Method according to claim 9 or 10, ***characterized* in that** the second set of wheels is the vehicle's front set of wheels (4).

12. Method according to any of claims 9-11, ***characterized* in that** it comprises the step of correcting the vehicle speed estimate *(v*_{*estimate*}*)* by an amount whose magnitude depends on the difference between said first and second parameters so as to obtain the actual speed of the vehicle.

13. Method according to claim 12, ***characterized* in that** it comprises the step of indicating the actual speed *(v*_{*actual*}*)* of the vehicle on display means (15) such as the speedometer of the vehicle.

14. Method according to claim 12 or 13, ***characterized* in that** it comprises the step of triggering the means (18) for correcting for the vehicle speed estimate *(v*_{*estimate*}*)* on identification of a difference that exceeds a pre-determined threshold value.

15. Method according to any of claims 12-14, ***characterized* in that** it further comprises the step of using the actual speed *(v*_{*actual*}*)* of the vehicle as the input for speed limiting means (15).

16. Computer program for estimating a vehicle speed, comprising computer readable program code means which when run on a computer causes the computer to estimate a first parameter based on the rotational speed of a first set of wheels, such as the drive wheels, so as to enable a vehicle speed estimate *(v*_{*estimate*}*)* to be obtained, ***characterized* by** computer readable program code means which when run on the computer causes the computer to estimate a second parameter based on the rotational speed of a second set of wheels of the vehicle and to identify any difference between said first and second parameters.

17. Computer program according to claim 16, ***characterized* in that** said first and second parameters are one of the following: a rotational speed or a vehicle speed.

18. Computer program according to claim 16 or 17, ***characterized* by** computer readable program code means which when run on the computer causes the computer to correct the vehicle speed estimate *(v*_{*estimate*}*)* by an amount whose magnitude depends on the difference between said first and second parameters so as to obtain the actual speed of the vehicle.

19. Computer program according to claim 18, ***characterized* by** computer readable program code means which when run on the computer causes the computer to trigger means (18) for correcting for the vehicle speed estimate *(v*_{*estimate*}*)* on identification of a difference that exceeds a pre-determined threshold value.

20. A computer program product comprising a computer program stored by means of a computer-readable medium arranged to make a computer or processor execute at least one of the steps according to the characterizing part of any of claims 16-19.

21. Electronic control unit (ECU), ***characterized* in that** it comprises execution means, a memory and data storage means whereby a computer program according to any of claims 16-19 is stored in said data storage means.
